# FASCICULE DE BREVET EUROPEEN

(11) **EP 4 388 955 B1**
(45) Date de publication et mention de la délivrance du brevet: **25.06.2025**
(21) Numéro de dépôt: 23216594.4
(22) Date de dépôt: 14.12.2023
(51) Int. Cl.: A47L 9/04, A47L 9/06, A47L 9/10, A47L 9/28, A47L 11/12, A47L 11/284, A47L 11/40

(54) **ROBOT DE NETTOYAGE AUTONOME ÉQUIPÉ D'UN DISPOSITIF DE NETTOYAGE HUMIDE**
AUTONOMER REINIGUNGSROBOTER MIT NASSREINIGUNGSVORRICHTUNG
AUTONOMOUS CLEANING ROBOT WITH WET CLEANING DEVICE

(30) Priorité: 21.12.2022 FR 2214098
(43) Date de publication de la demande: 26.06.2024
(73) Titulaire: SEB S.A., 69130 Ecully (FR)
(72) Inventeur: DELAIR, Laurent, 69134 ECULLY CEDEX (FR); DENIS, Guillaume, 69134 ECULLY CEDEX (FR); BOILLET, Mickael, 69134 ECULLY CEDEX (FR)
(74) Mandataire: Germain Maureau

(56) Documents cités:
- US-A1- 2008 222 837
- US-A1- 2019 038 106
- US-A1- 2019 274 507
- US-A1- 2019 290 089

## Description

### Domaine technique

La présente invention se rapporte au domaine des aspirateurs robots pouvant se déplacer de manière autonome sur une surface à nettoyer et permettant d'aspirer des poussières et des déchets présents sur la surface à nettoyer, qui peut par exemple être du carrelage, du parquet, du stratifié, de la moquette ou un tapis, et éventuellement de laver la surface à nettoyer simultanément à une opération d'aspiration.

### Etat de la technique

Les robots de nettoyage autonomes sont devenus d'un usage commun de nos jours, ceux-ci permettant de nettoyer des surfaces complètes d'une habitation sans aucune assistance de l'utilisateur dès l'instant où ces surfaces sont planes, c'est-à-dire sur un même niveau. Ils offrent ainsi un gain de temps considérable aux utilisateurs pour pratiquer d'autres activités.

Un robot de nettoyage autonome comprend de façon connue :
- un corps principal comportant une face inférieure configurée pour être orientée vers une surface à nettoyer et une bouche d'aspiration débouchant dans la face inférieure du corps principal, le corps principal délimitant une chambre d'aspiration reliée fluidiquement à la bouche d'aspiration,
- deux roues motrices configurées pour rouler sur la surface à nettoyer et montées mobiles en rotation sur le corps principal respectivement autour de deux axes de rotation qui sont sensiblement parallèles,
- une brosse de nettoyage rotative logée dans la chambre d'aspiration et montée mobile en rotation autour d'un axe de rotation de brosse,
- une unité d'aspiration qui est logée au moins en partie dans le corps principal et qui est configurée pour générer un flux d'air à travers la bouche d'aspiration,
- un dispositif de collecte de déchets comprenant un récipient de collecte de déchets situé en amont de l'unité d'aspiration et configuré pour être traversé par le flux d'air généré par l'unité d'aspiration et pour retenir des déchets transportés par le flux d'air,
- un dispositif de nettoyage humide situé dans une partie arrière du corps principal, et
- une batterie d'alimentation configurée pour alimenter électriquement le robot de nettoyage autonome.

La force d'appui exercée sur le sol à nettoyer par le dispositif de nettoyage humide d'un tel robot de nettoyage autonome peut s'avérer insuffisante pour assurer un nettoyage efficace, en particulier lorsqu'une partie importante de la masse du robot de nettoyage autonome est directement reprise par les roues motrices.

Pour pallier un tel inconvénient, il pourrait être envisagé de disposer certains des composants lourds du robot de nettoyage autonome dans une partie arrière du corps principal, de manière à augmenter les forces d'appui exercées par le dispositif de nettoyage humide sur la surface à nettoyer.

Toutefois, une telle configuration du robot de nettoyage autonome est susceptible d'induire un déséquilibre de la répartition des masses au sein du robot de nettoyage humide, ce qui est susceptible de nuire au guidage du robot de nettoyage humide lors de ses déplacements et également d'induire une qualité de nettoyage non uniforme de part et d'autre du plan longitudinal médian du corps principal.

Le document US2019/0290089 divulgue un robot de nettoyage autonome comprenant un corps principal comportant une bouche d'aspiration débouchant dans une face inférieure du corps principal ; une unité d'aspiration qui est logée au moins en partie dans le corps principal ; un dispositif de collecte de déchets ; un dispositif de nettoyage humide ; une batterie d'alimentation configurée pour alimenter électriquement le robot de nettoyage autonome ; et deux roues motrices configurées pour rouler sur un surface à nettoyer.

### Résumé de l'invention

La présente invention vise à remédier à ces inconvénients.

Le problème technique à la base de l'invention consiste notamment à fournir un robot de nettoyage autonome qui soit de structure simple, économique et compacte, tout en présentant des performances de nettoyage élevées.

A cet effet, l'invention a pour objet un robot de nettoyage autonome comprenant :
- un corps principal comportant une face inférieure configurée pour être orientée vers une surface à nettoyer et une bouche d'aspiration débouchant dans la face inférieure du corps principal, le corps principal délimitant une chambre d'aspiration reliée fluidiquement à la bouche d'aspiration,
- une unité d'aspiration qui est logée au moins en partie dans le corps principal, l'unité d'aspiration comprenant un moteur d'aspiration ayant un axe de moteur et un ventilateur qui est couplé au moteur d'aspiration et qui est configuré pour générer un flux d'air à travers la bouche d'aspiration,
- un dispositif de collecte de déchets comprenant un récipient de collecte de déchets situé en amont de l'unité d'aspiration et configuré pour être traversé par le flux d'air généré par l'unité d'aspiration et pour retenir des déchets transportés par le flux d'air,
- un dispositif de nettoyage humide situé dans une partie arrière du corps principal,
- une batterie d'alimentation configurée pour alimenter électriquement le robot de nettoyage autonome,
- deux roues motrices configurées pour rouler sur la surface à nettoyer et montées mobiles en rotation sur le corps principal respectivement autour de deux axes de rotation qui sont sensiblement parallèles.

L'unité d'aspiration et la batterie d'alimentation sont disposées de part et d'autre d'un plan longitudinal médian du corps principal et sont situées dans la partie arrière du corps principal, un premier axe passant par le centre de gravité de la batterie d'alimentation et un centre géométrique du corps principal, qui est sensiblement situé dans le plan longitudinal médian du corps principal, est incliné par rapport au plan longitudinal médian du corps principal d'un premier angle d'inclinaison, et un deuxième axe passant par le centre de gravité de l'unité d'aspiration et le centre géométrique du corps principal est incliné par rapport au plan longitudinal médian du corps principal d'un deuxième angle d'inclinaison, les premier et deuxième axes définissant un angle d'écartement inférieur à 130°, avantageusement compris entre 40° et 110°, et par exemple entre 90° et 110°.

Une telle disposition de l'unité d'aspiration et de la batterie d'alimentation, à savoir de part et d'autre du plan longitudinal médian du corps principal et avec un tel angle d'écartement, permet de mieux répartir les masses du robot de nettoyage autonome et donc d'équilibrer les forces d'appui exercées par le dispositif de nettoyage humide sur la surface à nettoyer.

De plus, le fait que l'unité d'aspiration et la batterie d'alimentation soient disposées dans une partie arrière du corps principal permet de reculer le centre de gravité de l'aspirateur, et donc d'augmenter les frottements du dispositif de nettoyage humide sur la surface à nettoyer.

Ainsi, la disposition spécifique de l'unité d'aspiration et de la batterie d'alimentation confère des performances de nettoyage améliorées au robot de nettoyage autonome.

Le robot de nettoyage autonome objet de la présente invention est conçu, comme la majorité des robots de nettoyage autonome, pour nettoyer efficacement les sols lorsqu'il se déplace selon une direction de déplacement parallèle à l'axe longitudinal du robot de nettoyage autonome et selon un sens de déplacement prédéterminé. La direction de déplacement parallèle à l'axe longitudinal du robot de nettoyage autonome et le sens de déplacement prédéterminé définissent une direction de déplacement principale du robot de nettoyage autonome objet de la présente invention. Ainsi, une partie avant ou une partie arrière du corps principal du robot de nettoyage autonome est identifiée par rapport à la direction de déplacement principale du robot de nettoyage autonome.

Le robot de nettoyage autonome peut en outre présenter une ou plusieurs des caractéristiques suivantes, prises seules ou en combinaison.

Selon un mode de réalisation de l'invention, le centre de gravité d'un ensemble formé par l'unité d'aspiration et la batterie d'alimentation est sensiblement situé sur le plan longitudinal médian du corps principal. Une telle disposition de l'unité d'aspiration et de la batterie d'alimentation participe à une meilleure répartition des masses au sein du robot de nettoyage autonome, ce qui d'une part assure un meilleur équilibrage des forces d'appui exercées par le dispositif de nettoyage humide sur la surface à nettoyer et d'autre part assure un meilleur guidage du robot de nettoyage autonome lors de ses déplacements.

Dans le présent document, « sensiblement situé sur » signifie « situé sur » ou « situé à une distance inférieure à 1 cm de ».

Selon un mode de réalisation de l'invention, chacun des premier et deuxième angles d'inclinaison est compris entre 20 et 55°. Une telle disposition de l'unité d'aspiration et de la batterie d'alimentation participe également à une meilleure répartition des masses du robot de nettoyage autonome
Selon un mode de réalisation de l'invention, une valeur absolue de la différence entre les premier et deuxième angles d'inclinaison est inférieure ou égale à 10°, et par exemple inférieure ou égale à 5°

Selon un mode de réalisation de l'invention, le deuxième angle d'inclinaison est sensiblement égal au premier angle d'inclinaison.

Selon un mode de réalisation de l'invention, le centre géométrique du corps principal est disposé entre les roues motrices.

Selon un mode de réalisation de l'invention, le centre géométrique du corps principal est sensiblement situé sur l'intersection du plan longitudinal médian du corps principal et d'un plan vertical contenant les axes de rotations des roues motrices.

Selon un mode de réalisation de l'invention, l'unité d'aspiration et la batterie d'alimentation sont disposées sensiblement de manière symétrique par rapport au plan longitudinal médian du corps principal.

Selon un mode de réalisation de l'invention, le deuxième axe est contenu dans un plan vertical médian de la batterie d'alimentation.

Selon un mode de réalisation de l'invention, le deuxième axe est contenu dans un plan vertical contenant l'axe de moteur du moteur d'aspiration.

Selon un mode de réalisation de l'invention, l'unité d'aspiration et la batterie d'alimentation sont situées à l'arrière des axes de rotation des deux roues motrices, et par exemple en majorité à l'arrière des deux roues motrices. Une telle disposition de l'unité d'aspiration et de la batterie d'alimentation permet d'augmenter les frottements du dispositif de nettoyage humide sur la surface à nettoyer, du fait du poids exercé par le corps principal sur le dispositif de nettoyage humide. Ainsi, une telle disposition de l'unité d'aspiration et de la batterie d'alimentation augmente l'efficacité de grattage du dispositif de nettoyage humide sur le sol et donc la qualité de nettoyage du robot de nettoyage autonome.

Selon un mode de réalisation de l'invention, le dispositif de nettoyage humide comporte deux supports de serpillère qui sont chacun montés sur le corps principal, et deux serpillères montées de manière amovible respectivement sur les deux supports de serpillère et configurées pour être en contact avec la surface à nettoyer, la batterie d'alimentation étant située au moins en partie au-dessus de l'un des supports de serpillère et l'unité d'aspiration étant située au moins en partie au-dessus de l'autre des supports de serpillère. Une telle disposition de l'unité d'aspiration et de la batterie d'alimentation permet d'augmenter encore les frottements du dispositif de nettoyage humide sur la surface à nettoyer, et donc d'augmenter encore la qualité de nettoyage du robot de nettoyage autonome.

Selon un mode de réalisation de l'invention, le robot de nettoyage autonome est configuré de telle sorte que, lorsque le robot de nettoyage autonome repose sur une surface à nettoyer, une partie arrière du robot de nettoyage autonome repose sur ladite surface à nettoyer directement par les deux serpillères. Une telle configuration du robot de nettoyage autonome permet aux serpillères de reprendre directement au moins une partie de la masse du robot de nettoyage autonome, et donc d'augmenter encore la force d'appui exercer par chacune des serpillères sur le sol à nettoyer. Ainsi, une telle configuration du robot de nettoyage autonome permet d'améliorer encore la qualité de nettoyage du robot de nettoyage autonome.

Selon un mode de réalisation de l'invention, le centre de gravité de la batterie d'alimentation est situé au-dessus de l'un des supports de serpillère, et le centre de gravité de l'unité d'aspiration est située au-dessus de l'autre des supports de serpillère.

Selon un mode de réalisation de l'invention, la batterie d'alimentation est entièrement située au-dessus de l'un des supports de serpillère, et l'unité d'aspiration est entièrement située au-dessus de l'autre des supports de serpillère.

Selon un mode de réalisation de l'invention, le robot de nettoyage autonome comporte un réservoir de liquide de nettoyage. De façon avantageuse, le réservoir de liquide de nettoyage est disposé entre les roues motrices. Ainsi, la variation du niveau de remplissage du réservoir de liquide de nettoyage n'est pas susceptible de déséquilibrer la répartition des masses au sein du robot de nettoyage humide.

Selon un mode de réalisation de l'invention, le dispositif de nettoyage humide comporte au moins un orifice de sortie de liquide qui est configuré pour être relié fluidiquement au réservoir de liquide de nettoyage et qui est configuré pour alimenter en liquide de nettoyage les serpillères montées sur les supports de serpillère.

Selon un mode de réalisation de l'invention, le récipient de collecte de déchets est situé au moins en partie entre les roues motrices.

Selon un mode de réalisation de l'invention, la batterie d'alimentation comporte des cellules de batterie qui sont de forme globalement cylindrique et qui présentent des axes de cellule qui sont sensiblement parallèles entre eux.

Selon un mode de réalisation de l'invention, le plan vertical médian de la batterie d'alimentation s'étend sensiblement perpendiculairement aux axes de cellule des cellules de batterie.

Selon un autre mode de réalisation de l'invention, le plan vertical médian de la batterie d'alimentation s'étend sensiblement parallèlement aux axes de cellule des cellules de batterie.

Selon un mode de réalisation de l'invention, le robot de nettoyage autonome comporte un canal de liaison reliant fluidiquement la chambre d'aspiration au récipient de collecte de déchets.

Selon un mode de réalisation de l'invention, le canal de liaison présente une forme globalement cylindrique et est configuré pour s'étendre sensiblement verticalement lorsque le robot de nettoyage autonome repose sur une surface horizontale.

Selon un mode de réalisation de l'invention, le canal de liaison présente une section circulaire ou oblongue.

Selon un mode de réalisation de l'invention, le canal de liaison débouche dans une partie arrière de la chambre d'aspiration. Une telle disposition du canal de liaison favorise encore le guidage des déchets aspirés vers le récipient de collecte de déchets.

Selon un mode de réalisation de l'invention, le plan longitudinal médian du corps principal est sécant avec le canal de liaison.

Selon un mode de réalisation de l'invention, le corps principal comporte un bord arrière qui est courbé et qui présente, vu de dessus sous une orientation sensiblement verticale, une forme en arc de cercle. De façon avantageuse, le bord arrière présente un rayon de courbure dont le centre correspond au centre géométrique du corps principal.

Selon un mode de réalisation de l'invention, le corps principal présente, vu de dessus sous une orientation sensiblement verticale, une forme générale de D.

Selon un mode de réalisation de l'invention, le dispositif de collecte de déchets est monté de manière amovible sur le corps principal.

Selon un mode de réalisation de l'invention, la bouche d'aspiration est prévue dans une partie avant du corps principal.

Selon un mode de réalisation de l'invention, le robot de nettoyage autonome comporte une brosse de nettoyage rotative logée dans la chambre d'aspiration et montée mobile en rotation autour d'un axe de rotation de brosse.

Selon un mode de réalisation de l'invention, l'axe de rotation de brosse s'étend transversalement, et par exemple perpendiculairement, à la direction de déplacement principale du robot de nettoyage autonome.

Selon un mode de réalisation de l'invention, la bouche d'aspiration présente une forme allongée et s'étend selon une direction d'extension qui est transversale, et par exemple perpendiculaire, à la direction de déplacement principale du robot de nettoyage autonome.

### Brève description des figures

On comprendra mieux les buts, aspects et avantages de la présente invention, d'après la description donnée ci-après d'un mode de réalisation de l'invention présenté à titre d'exemple non limitatif, en se référant aux dessins annexés dans lesquels :
La figure 1 est une vue en perspective de dessus d'un robot de nettoyage autonome selon l'invention.
La figure 2 est une vue en perspective de dessous du robot de nettoyage autonome de la figure 1.
La figure 3 est une vue partielle en perspective de dessous du robot de nettoyage autonome de la figure 1.
La figure 4 est une vue de dessous du robot de nettoyage autonome de la figure 1.
La figure 5 est une vue de côté du robot de nettoyage autonome de la figure 1.
La figure 6 est une vue en coupe longitudinale du robot de nettoyage autonome de la figure 1.
La figure 7 est une vue de dessus du robot de nettoyage autonome de la figure 1.
La figure 8 est une vue partielle de dessus du robot de nettoyage autonome de la figure 1.
La figure 9 est vue en perspective de dessus du robot de nettoyage autonome de la figure 1 montrant le dispositif de nettoyage humide retiré du corps principal.

### Description détaillée

Seuls les éléments nécessaires à la compréhension de l'invention sont représentés. Pour faciliter la lecture des dessins, les mêmes éléments portent les mêmes références d'une figure à l'autre.

On notera que dans ce document, les termes « horizontal », « vertical », « inférieur », « supérieur », « haut », « dessous » employés pour décrire le robot de nettoyage autonome ou le corps principal font références au robot de nettoyage autonome en situation d'usage lorsqu'il repose par ses roues sur un sol à nettoyer qui est plat et horizontal.

Dans le présent document, on entend par « plan longitudinal médian », un plan vertical qui est parallèle à la direction de déplacement principale et qui divise le corps principal en deux parties sensiblement égales.

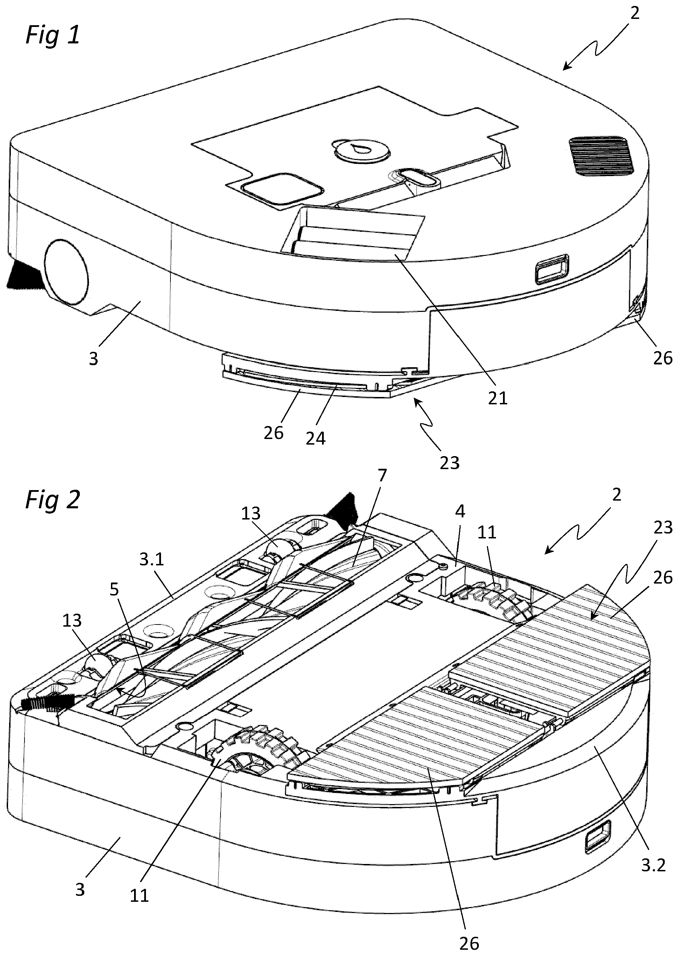

Les figures 1 à 9 représentent un robot de nettoyage autonome 2, et plus particulièrement un aspirateur robot, configuré pour se déplacer de manière autonome sur une surface à nettoyer.

Le robot de nettoyage autonome 2 comprend un corps principal 3 comportant une face inférieure 4 qui est configurée pour être orientée vers la surface à nettoyer, et une bouche d'aspiration 5 qui est prévue dans une partie avant 3.1 du corps principal 3 et qui débouche dans la face inférieure 4 du corps principal 3. De façon avantageuse, la bouche d'aspiration 5 est allongée et s'étend selon une direction d'extension qui est perpendiculaire à une direction de déplacement principale D du robot de nettoyage autonome 2.

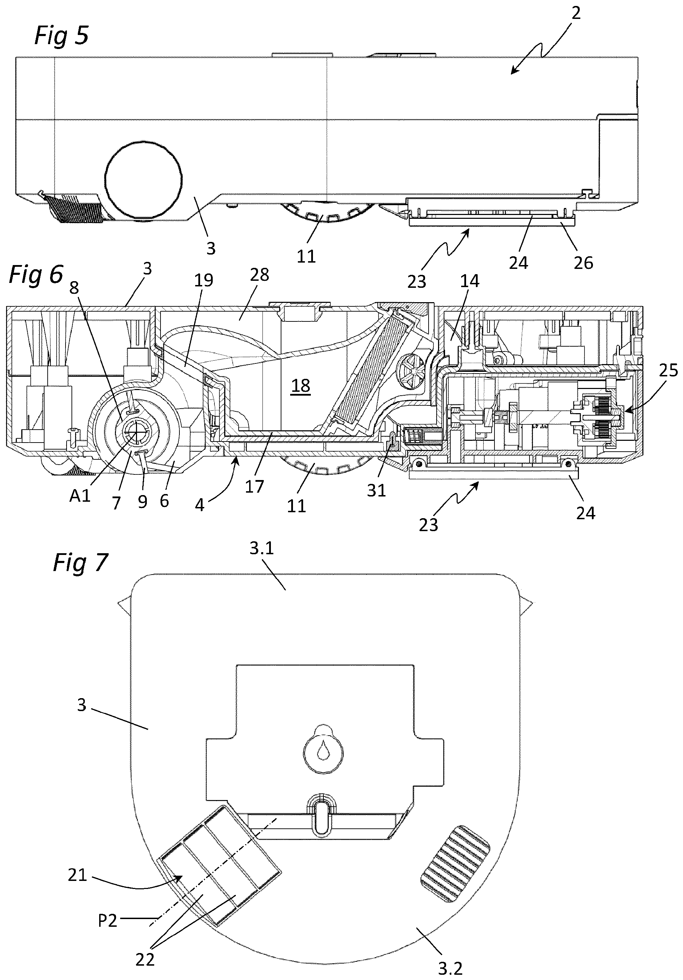

Comme montré sur la figure 6, le corps principal 3 délimite une chambre d'aspiration 6 qui débouche dans la face inférieure 4 du corps principal 3 via la bouche d'aspiration 5.

Selon le mode de réalisation représenté sur les figures, le corps principal 3 présente, vu de dessus sous une orientation sensiblement verticale, une forme générale de D, et comporte un bord arrière qui est courbé et qui présente, vu de dessus sous une orientation sensiblement verticale, une forme en arc de cercle. Cependant, le corps principal 3 pourrait présenter une toute autre forme, et par exemple présenter une forme générale circulaire ou rectangulaire. De façon avantageuse, le bord arrière du corps principal 3 présente un rayon de courbure dont le centre correspond au centre géométrique C du corps principal 3.

Le robot de nettoyage autonome 2 comprend de plus une brosse de nettoyage rotative 7 logée dans la chambre d'aspiration 6 et montée mobile en rotation autour d'un axe de rotation de brosse A1 qui s'étend transversalement, et plus particulièrement perpendiculairement, à la direction de déplacement principale D. De façon avantageuse, l'axe de rotation de brosse A1 est sensiblement horizontal lorsque le robot de nettoyage autonome 2 repose sur une surface horizontale.

Selon le mode de réalisation représenté sur les figures, la brosse de nettoyage rotative 7 comporte un corps de brosse 8 qui présente un axe longitudinal central et qui est configuré pour être entraîné en rotation selon un sens de rotation prédéterminé, et autour de l'axe de rotation de brosse A1. De façon avantageuse, l'axe de rotation de brosse A1 est coaxial avec l'axe longitudinal central du corps de brosse 8.

La brosse de nettoyage rotative 7 comporte en outre une ou plusieurs rangée(s) de poils 9, par exemple deux rangées de poils, prévue(s) sur une surface périphérique externe du corps de brosse 8 et s'étendant sur au moins une partie de la longueur du corps de brosse 8. Selon une variante de réalisation de l'invention, la brosse de nettoyage rotative 7 pourrait comporter en outre, ou à la place des rangées de poils 9, une ou plusieurs lamelle(s) de nettoyage, par exemple élastiquement déformable(s) ou rigide(s), prévue(s) sur la surface périphérique externe du corps de brosse 8.

Le robot de nettoyage autonome 2 comprend également un mécanisme d'entraînement (non visible sur les figures) qui est configuré pour entraîner en rotation le corps de brosse 8 autour de l'axe de rotation de brosse A1.

Comme montré plus particulièrement sur les figures 2 à 4, le robot de nettoyage autonome 2 comprend deux roues motrices 11 qui sont configurées pour rouler sur la surface à nettoyer. Les deux roues motrices 11 sont montées mobiles en rotation par rapport au corps principal 3, et présentent des axes de rotation qui sont parallèles, et avantageusement coaxiaux. De façon avantageuse, les axes de rotation des roues motrices 11 s'étendent perpendiculairement à la direction de déplacement principale D.

Les deux roues motrices 11 sont configurées pour faire saillie de la face inférieure 4 du corps principal 3, et sont disposées de part et d'autre d'un plan longitudinal médian P1 du corps principal 3. De façon avantageuse, les deux roues motrices 11 sont disposées de manière symétrique par rapport au plan longitudinal médian P1 du corps principal 3, et sont des roues latérales du robot de nettoyage autonome 2.

Les deux roues motrices 11 sont avantageusement motorisées indépendamment l'une de l'autre. Ainsi, le robot de nettoyage autonome 2 comprend deux mécanismes d'entraînement en rotation 12 logés dans le corps principal 3 et configurés chacun pour entraîner en rotation une roue motrice 11 respective parmi les deux roues motrices 11. Chaque mécanisme d'entraînement en rotation 12 comporte un moteur d'entraînement couplé en rotation à la roue motrice 11 respective et disposé par exemple dans une partie latérale respective du corps principal 3. Selon la commande des deux moteurs d'entraînement précités, le corps principal 3 peut pivoter à gauche, à droite ou sur lui-même, avancer ou encore reculer.

Selon le mode de réalisation représenté sur les figures, le robot de nettoyage autonome 2 comporte des roues additionnelles 13 montées libre en rotation par rapport au corps principal 3, et par exemple deux roues additionnelles 13 disposées sur la partie avant 3.1 du corps principal 3. De façon avantageuse, toutes les roues additionnelles 13 sont situées à l'avant des axes de rotation des deux roues motrices 11, de telle sorte que le robot de nettoyage autonome 2 est dépourvu de roue additionnelle située à l'arrière des axes de rotation des deux roues motrices 11.

Le robot de nettoyage autonome 2 comprend en outre une unité d'aspiration 14 qui est logée dans le corps principal 3. L'unité d'aspiration 14 comprend un moteur d'aspiration 15 ayant un axe de moteur et un ventilateur 16 qui est couplé au moteur d'aspiration 15 et qui est configuré pour générer un flux d'air à travers la bouche d'aspiration 5.

Le robot de nettoyage autonome 2 comprend également un dispositif de collecte de déchets 17 (voir la figure 6) monté de manière amovible sur le corps principal 3. Le dispositif de collecte de déchets 17 comporte un récipient de collecte de déchets 18 situé en amont de l'unité d'aspiration 14 et au moins en partie entre les roues motrices 11. Le récipient de collecte de déchets 18 est configuré pour être traversé par le flux d'air généré par le ventilateur 16 lorsque le robot de nettoyage autonome 2 est en fonctionnement, et pour retenir des déchets transportés par le flux d'air.

Le robot de nettoyage autonome 2 comprend de plus un canal de liaison 19 reliant fluidiquement la chambre d'aspiration 6 au récipient de collecte de déchets 18. Le canal de liaison 19 présente une forme globalement cylindrique, et est configuré pour s'étendre verticalement lorsque le robot de nettoyage autonome 2 repose sur une surface horizontale. Cependant, le canal de liaison 19 pourrait être configuré pour être incliné par rapport à la verticale d'un angle d'inclinaison inférieur ou égal à 10°, et par exemple inférieur ou égal à 5°, lorsque le robot de nettoyage autonome 2 repose sur une surface horizontale. Le canal de liaison 19 peut par exemple présenter une section oblongue ou circulaire.

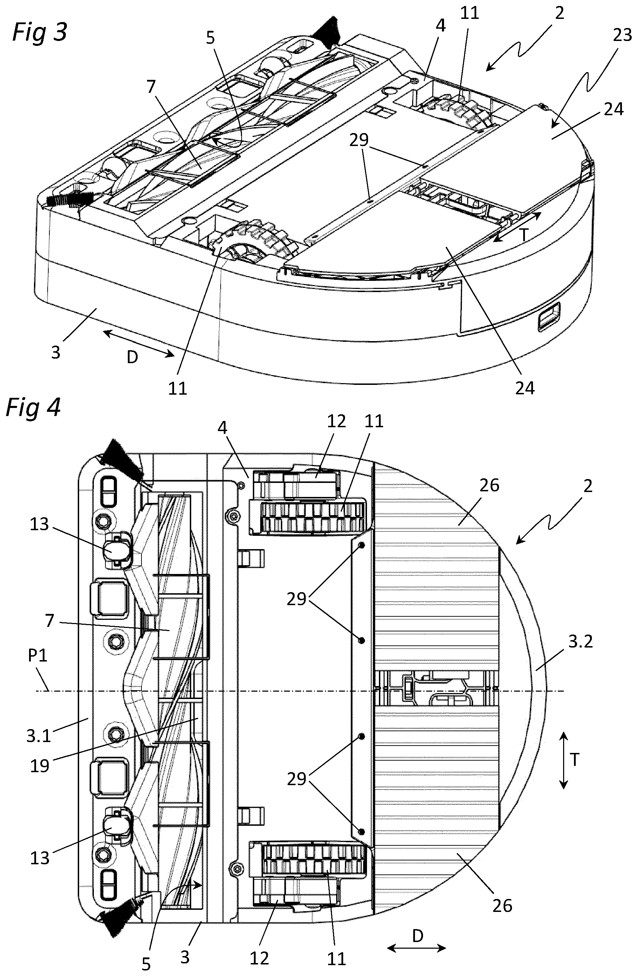

Comme montré sur les figures 4 et 6, le canal de liaison 19 débouche dans une partie arrière de la chambre d'aspiration 6, et le plan longitudinal médian P1 du corps principal 3 est sécant avec le canal de liaison 19.

Le robot de nettoyage autonome 2 comporte également une batterie d'alimentation 21 configurée pour alimenter électriquement le robot de nettoyage autonome 2. La batterie d'alimentation 21 est rechargeable et est logée dans le corps principal 3.

La batterie d'alimentation 21 comporte des cellules de batterie 22 qui sont de forme globalement cylindrique et qui présentent des axes de cellule qui sont sensiblement parallèles entre eux. Selon le mode de réalisation représenté sur les figures, la batterie d'alimentation 21 présente un plan vertical médian P2 qui s'étend sensiblement perpendiculairement aux axes de cellule des cellules de batterie 22. Cependant, selon une variante de réalisation de l'invention, les cellules de batterie 22 pourraient présenter une orientation pivotée de 90° par rapport à l'orientation représentée sur la figure 7, de telle sorte que le plan vertical médian P2 de la batterie d'alimentation 21 s'étende sensiblement parallèlement aux axes de cellule des cellules de batterie 22.

L'unité d'aspiration 14 et la batterie d'alimentation 21 sont disposées de part et d'autre du plan longitudinal médian P1 du corps principal 3 et sont situées dans une partie arrière 3.2 du corps principal 3, et de préférence à l'arrière des axes de rotation des deux roues motrices 11. De façon avantageuse, l'unité d'aspiration 14 et la batterie d'alimentation 21 sont disposées sensiblement de manière symétrique par rapport au plan longitudinal médian P1 du corps principal 3.

Selon un mode de réalisation de l'invention, le centre de gravité G d'un ensemble formé par l'unité d'aspiration 14 et la batterie d'alimentation 21 est sensiblement situé sur le plan longitudinal médian P1 du corps principal 3.

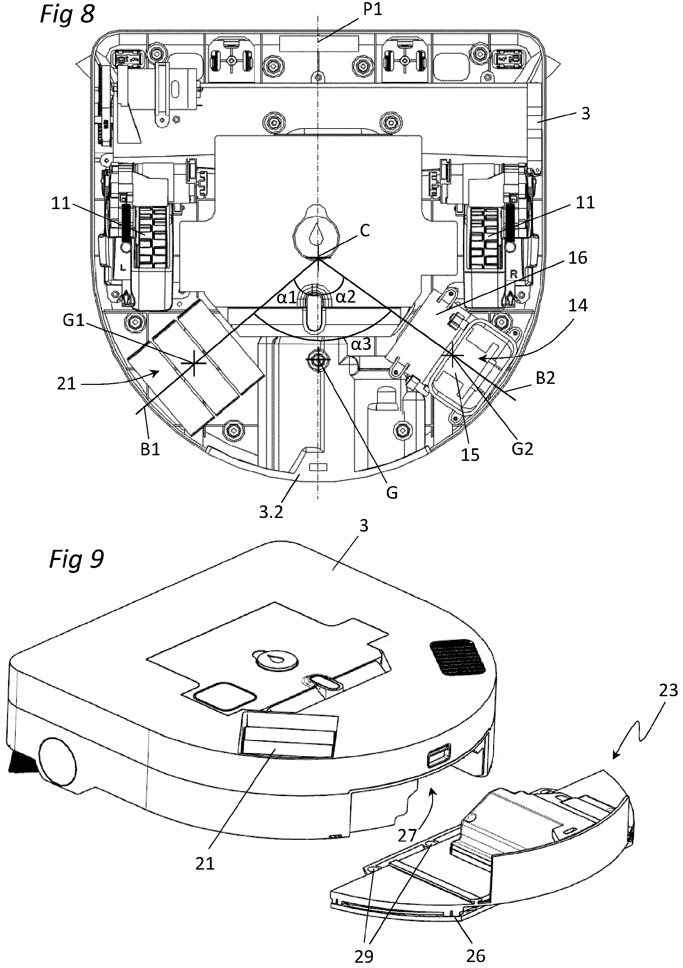

Comme montré sur la figure 8, un premier axe B1 passant par le centre de gravité G1 de la batterie d'alimentation 21 et le centre géométrique C du corps principal 3, qui est situé dans le plan longitudinal médian P1 du corps principal 3, est incliné par rapport au plan longitudinal médian P1 du corps principal 3 d'un premier angle d'inclinaison α1, et un deuxième axe B2 passant par le centre de gravité G2 de l'unité d'aspiration 14 et le centre géométrique C du corps principal 3 est incliné par rapport au plan longitudinal médian P1 du corps principal 3 d'un deuxième angle d'inclinaison α2. Une valeur absolue de la différence entre les premier et deuxième angles d'inclinaison α1, α2 est inférieure ou égale à 10°, et par exemple inférieure ou égale à 5°. De façon avantageuse, le deuxième angle d'inclinaison α2 est sensiblement égal au premier angle d'inclinaison α1.

Selon le mode de réalisation représenté sur les figures, les premier et deuxième axes B1, B2 définissent un angle d'écartement α3 inférieur à 130°, et avantageusement compris entre 40° et 110°, et par exemple entre 90° et 110°, et chacun des premier et deuxième angles d'inclinaison α1, α2 est compris entre 20 et 55°. De façon avantageuse, le plan vertical médian P2 de la batterie d'alimentation 21 contient le premier axe B1, et le deuxième axe B2 est contenu dans un plan vertical contenant l'axe de moteur du moteur d'aspiration 15.

Comme montré sur la figure 8, le centre géométrique C du corps principal 3 est sensiblement situé sur l'intersection du plan longitudinal médian P1 du corps principal 3 et d'un plan vertical contenant les axes de rotations des roues motrices 11.

Comme montré notamment sur la figure 2, le robot de nettoyage autonome 2 comprend en outre un dispositif de nettoyage humide 23 qui est disposé dans la partie arrière 3.2 du corps principal 3. De façon avantageuse, le dispositif de nettoyage humide 23 est disposé à l'opposé de la brosse de nettoyage rotative 7 par rapport aux axes de rotation des roues motrices 11.

Selon le mode de réalisation représenté sur les figures, le dispositif de nettoyage humide 23 comporte deux supports de serpillère 24 qui sont disposés côté à côté et qui sont situés à l'arrière des axes de rotation des roues motrices 11. De façon avantageuse, les deux supports de serpillère 24 sont disposés de part et d'autre du plan longitudinal médian P1 du corps principal 3, et sont configurés pour s'étendre sensiblement horizontalement lorsque le corps principal 3 repose sur une surface horizontale.

De façon avantageuse, la batterie d'alimentation 21 est située au moins en partie, et par exemple entièrement, au-dessus de l'un des supports de serpillère 24, et l'unité d'aspiration 14 est située au moins en partie, et par exemple entièrement, au-dessus de l'autre des supports de serpillère 24. Ainsi, le centre de gravité G1 de la batterie d'alimentation 21 est situé au-dessus de l'un des supports de serpillère 24, et le centre de gravité G2 de l'unité d'aspiration 14 est située au-dessus de l'autre des supports de serpillère 24.

Selon le mode de réalisation représenté sur les figures, les deux supports de serpillère 24 sont chacun montés mobiles en translation par rapport au corps principal 3 selon une direction de translation T qui s'étend transversalement, et avantageusement perpendiculairement, à la direction de déplacement principale D du robot de nettoyage autonome 2. De façon avantageuse, les supports de serpillère 24 sont montés mobiles l'un par rapport à l'autre entre une configuration rapprochée dans laquelle les deux supports de serpillère 24 sont rapprochés l'un de l'autre, et une configuration éloignée dans laquelle les deux supports de serpillère 24 sont éloignés l'un de l'autre.

Le dispositif de nettoyage humide 23 comporte également un mécanisme d'entraînement en translation 25 configuré pour déplacer en translation les supports de serpillère 24 selon la direction de translation T et alternativement entre la configuration rapprochée et la configuration éloignée.

Le dispositif de nettoyage humide 23 comporte en outre deux serpillères 26 montées de manière amovible respectivement sur les deux supports de serpillère 24. Les serpillères 26 sont configurées pour être en contact avec la surface à nettoyer, et plus particulièrement pour exercer une force d'appui sur la surface à nettoyer, lorsque le robot de nettoyage autonome 2 repose sur la surface à nettoyer.

De façon avantageuse, le robot de nettoyage autonome 2 est configuré de telle sorte que, lorsque le robot de nettoyage autonome 2 repose sur une surface à nettoyer, une partie arrière du robot de nettoyage autonome 2 repose sur ladite surface à nettoyer directement par les deux serpillères 26.

Comme montré plus particulièrement sur la figure 9, le dispositif de nettoyage humide 23 est monté de manière amovible par rapport au corps principal 3, et le corps principal 3 comporte un logement de réception 27 dans lequel est reçu au moins en partie le dispositif de nettoyage humide 23. Le dispositif de nettoyage humide 23 est avantageusement configuré pour être retiré du corps principal 3 par un mouvement de translation dirigé vers l'arrière du corps principal 3.

Le robot de nettoyage autonome 2 comporte également un réservoir de liquide de nettoyage 28 qui est monté, par exemple de manière amovible, sur le corps principal 3. Le réservoir de liquide de nettoyage 28 peut par exemple être disposé entre les roues motrices 11. Le réservoir de liquide de nettoyage 28 et le récipient de collecte de déchets 18 peuvent par exemple être superposés, et être solidaires l'un de l'autre. Selon un tel mode de réalisation, le robot de nettoyage autonome 2 peut par exemple comporter un réservoir amovible comportant un premier compartiment formant le réservoir de liquide de nettoyage 28 et un deuxième compartiment formant le récipient de collecte de déchets 18. Toutefois, selon une variante de réalisation de l'invention, le réservoir de liquide de nettoyage 28 pourrait être distinct du dispositif de collecte de déchets 17, et par exemple être prévu directement sur le dispositif de nettoyage humide 23.

Le dispositif de nettoyage humide 23 comporte en outre une pluralité d'orifices de sortie de liquide 29 qui sont configurés pour être reliés fluidiquement au réservoir de liquide de nettoyage 28 et qui sont configurés pour alimenter en liquide de nettoyage les serpillères 26 montées sur les supports de serpillère 24. De façon avantageuse, les orifices de sortie de liquide 29 sont situés à l'avant des supports de serpillère 24, et par exemple à l'avant des serpillères 26, et sont configurés pour être orientés vers la surface à nettoyer.

Le robot de nettoyage autonome 2 comporte également un circuit d'alimentation en liquide de nettoyage (non décrit en détail) prévu sur le corps principal 3 et configuré pour relier fluidiquement les orifices de sortie de liquide 29 au réservoir de liquide de nettoyage 28. Le circuit d'alimentation en liquide de nettoyage peut par exemple comporter notamment un distributeur 31 (voir la figure 6) logé dans le corps principal 3.

Selon une variante de réalisation de l'invention non représentée sur les figures, le dispositif de nettoyage humide 23 pourrait être pourvu d'un élément de traitement de sol, autre qu'une serpillère, configuré pour réaliser un traitement mécanique, chimique, thermique ou rayonnant du sol.

Selon une autre variante de réalisation de l'invention non représentée sur les figures, le dispositif de nettoyage humide 23 pourrait comporter au moins une serpillère passive, c'est-à-dire qui est montée immobile par rapport au corps principal 3.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Robot de nettoyage autonome (2) comprenant :
- un corps principal (3) comportant une face inférieure (4) configurée pour être orientée vers une surface à nettoyer et une bouche d'aspiration (5) débouchant dans la face inférieure (4) du corps principal (3), le corps principal (3) délimitant une chambre d'aspiration (6) reliée fluidiquement à la bouche d'aspiration (5),
- une unité d'aspiration (14) qui est logée au moins en partie dans le corps principal (3), l'unité d'aspiration (14) comprenant un moteur d'aspiration (15) ayant un axe de moteur et un ventilateur (16) qui est couplé au moteur d'aspiration (15) et qui est configuré pour générer un flux d'air à travers la bouche d'aspiration (5),
- un dispositif de collecte de déchets (17) comprenant un récipient de collecte de déchets (18) situé en amont de l'unité d'aspiration (14) et configuré pour être traversé par le flux d'air généré par l'unité d'aspiration (14) et pour retenir des déchets transportés par le flux d'air,
- un dispositif de nettoyage humide (23) situé dans une partie arrière (3.2) du corps principal (3),
- une batterie d'alimentation (21) configurée pour alimenter électriquement le robot de nettoyage autonome (2), et
- deux roues motrices (11) configurées pour rouler sur la surface à nettoyer et montées mobiles en rotation sur le corps principal (3) respectivement autour de deux axes de rotation qui sont sensiblement parallèles,
**caractérisé en ce que** l'unité d'aspiration (14) et la batterie d'alimentation (21) sont disposées de part et d'autre d'un plan longitudinal médian (P1) du corps principal (3) et sont situées dans la partie arrière (3.2) du corps principal (3), **en ce qu'**un premier axe (B1) passant par le centre de gravité (G1) de la batterie d'alimentation (21) et un centre géométrique (C) du corps principal (3), qui est sensiblement situé dans le plan longitudinal médian (P1) du corps principal (3), est incliné par rapport au plan longitudinal médian (P1) du corps principal (3) d'un premier angle d'inclinaison (α1), et **en ce qu'**un deuxième axe (B2) passant par le centre de gravité (G2) de l'unité d'aspiration (14) et le centre géométrique (C) du corps principal (3) est incliné par rapport au plan longitudinal médian (P1) du corps principal (3) d'un deuxième angle d'inclinaison (α2), les premier et deuxième axes (B1, B2) définissant un angle d'écartement (α3) inférieur à 130°.

2. Robot de nettoyage autonome (2) selon la revendication 1, dans lequel le centre de gravité (G) d'un ensemble formé par l'unité d'aspiration (14) et la batterie d'alimentation (21) est sensiblement situé sur le plan longitudinal médian (P1) du corps principal (3).

3. Robot de nettoyage autonome (2) selon la revendication 1 ou 2, dans lequel chacun des premier et deuxième angles d'inclinaison (α1, α2) est compris entre 20 et 55°.

4. Robot de nettoyage autonome (2) selon l'une quelconque des revendications 1 à 3, dans lequel une valeur absolue de la différence entre les premier et deuxième angles d'inclinaison (α1, α2) est inférieure ou égale à 10°.

5. Robot de nettoyage autonome (2) selon l'une quelconque des revendications 1 à 4, dans lequel le centre géométrique (C) du corps principal (3) est sensiblement situé sur l'intersection du plan longitudinal médian (P1) du corps principal (3) et d'un plan vertical contenant les axes de rotations des roues motrices (11).

6. Robot de nettoyage autonome (2) selon l'une quelconque des revendications 1 à 5, dans lequel l'unité d'aspiration (14) et la batterie d'alimentation (21) sont disposées sensiblement de manière symétrique par rapport au plan longitudinal médian (P1) du corps principal (3).

7. Robot de nettoyage autonome (2) selon l'une quelconque des revendications 1 à 6, dans lequel le premier axe (B1) est contenu dans un plan vertical médian (P2) de la batterie d'alimentation (21).

8. Robot de nettoyage autonome (2) selon l'une quelconque des revendications 1 à 7, dans lequel le deuxième axe (B2) est contenu dans un plan vertical contenant l'axe de moteur du moteur d'aspiration (15).

9. Robot de nettoyage autonome (2) selon l'une quelconque des revendications 1 à 8, dans lequel l'unité d'aspiration (14) et la batterie d'alimentation (21) sont situées à l'arrière des axes de rotation des deux roues motrices (11).

10. Robot de nettoyage autonome (2) selon l'une quelconque des revendications 1 à 9, dans lequel le dispositif de nettoyage humide (23) comporte deux supports de serpillère (24) qui sont chacun montés sur le corps principal (3), et deux serpillères (26) montées de manière amovible respectivement sur les deux supports de serpillère (24) et configurées pour être en contact avec la surface à nettoyer, la batterie d'alimentation (21) étant située au moins en partie au-dessus de l'un des supports de serpillère (24) et l'unité d'aspiration (14) étant située au moins en partie au-dessus de l'autre des supports de serpillère (24).

11. Robot de nettoyage autonome (2) selon l'une quelconque des revendications 1 à 10, dans lequel la batterie d'alimentation (21) comporte des cellules de batterie (22) qui sont de forme globalement cylindrique et qui présentent des axes de cellule qui sont sensiblement parallèles entre eux.

12. Robot de nettoyage autonome (2) selon la revendication 11, dans lequel le plan vertical médian (P2) de la batterie d'alimentation (21) s'étend sensiblement perpendiculairement aux axes de cellule des cellules de batterie (22).

13. Robot de nettoyage autonome (2) selon l'une quelconque des revendications 1 à 12, lequel comporte une brosse de nettoyage rotative (7) logée dans la chambre d'aspiration (6) et montée mobile en rotation autour d'un axe de rotation de brosse (A1).

## Patentansprüche

1. Autonomer Reinigungsroboter (2), der Folgendes umfasst:
- einen Hauptkörper (3), der eine Unterseite (4) aufweist, die so eingerichtet ist, dass sie zu einer zu reinigenden Oberfläche ausgerichtet ist, und einen Saugstutzen (5), der in die Unterseite (4) des Hauptkörpers (3) mündet, wobei der Hauptkörper (3) eine Saugkammer (6) begrenzt, die fluidisch mit dem Saugstutzen (5) verbunden ist,
- eine Saugeinheit (14), die mindestens teilweise im Hauptkörper (3) untergebracht ist, wobei die Saugeinheit (14) einen Saugmotor (15) mit einer Motorachse und einen Lüfter (16) umfasst, der mit dem Saugmotor (15) gekoppelt ist und so eingerichtet ist, dass er einen Luftstrom durch den Saugstutzen (5) erzeugt,
- eine Abfallsammelvorrichtung (17), die einen Abfallsammelbehälter (18) umfasst, der der Saugeinheit (14) vorgelagert ist und so eingerichtet ist, dass er vom von der Ansaugeinheit (14) erzeugten Luftstrom durchquert wird und Abfall zurückhält, der durch den Luftstrom transportiert wird, und
- eine Nassreinigungsvorrichtung (23), die sich in einem hinteren Teil (3.2) des Hauptkörpers (3) befindet,
- eine Stromversorgungsbatterie (21), die so eingerichtet ist, dass sie den autonomen Reinigungsroboter (2) elektrisch versorgt, und
- zwei Antriebsräder (11), die so eingerichtet sind, dass sie auf der zu reinigenden Oberfläche rollen und drehbar am Hauptkörper (3) jeweils um zwei Drehachsen montiert sind, die im Wesentlichen parallel sind,
**dadurch gekennzeichnet, dass** die Saugeinheit (14) und die Stromversorgungsbatterie (21) auf beiden Seiten einer mittleren Längsebene (P1) des Hauptkörpers (3) angeordnet sind und sich im hinteren Teil (3.2) des Hauptkörpers (3) befinden, dass eine erste Achse (B1), die durch den Schwerpunkt (G1) der Stromversorgungsbatterie (21) und ein geometrisches Zentrum (C) des Hauptkörpers (3) verläuft, das im Wesentlichen in der mittleren Längsebene (P1) des Hauptkörpers (3) liegt, um einen ersten Neigungswinkel (α1) gegenüber der mittleren Längsebene (P1) des Hauptkörpers (3) geneigt ist, und dass eine zweite Achse (B2), die durch den Schwerpunkt (G2) der Saugeinheit (14) und das geometrische Zentrum (C) des Hauptkörpers (3) verläuft, um einen zweiten Neigungswinkel (α2) gegenüber der mittleren Längsebene (P1) des Hauptkörpers (3) geneigt ist, wobei die erste und die zweite Achse (B1, B2) einen Abstandswinkel (α3) von weniger als 130° definieren.

2. Autonomer Reinigungsroboter (2) nach Anspruch 1, wobei sich der Schwerpunkt (G) einer von der Saugeinheit (14) und der Stromversorgungsbatterie (21) gebildeten Baugruppe im Wesentlichen auf der mittleren Längsebene (P1) des Hauptkörpers (3) befindet.

3. Autonomer Reinigungsroboter (2) nach Anspruch 1 oder 2, wobei jeder des ersten und des zweiten Neigungswinkels (α1, α2) zwischen 20 und 55° liegt.

4. Autonomer Reinigungsroboter (2) nach einem der Ansprüche 1 bis 3, wobei ein absoluter Wert der Differenz zwischen dem ersten und dem zweiten Neigungswinkel (α1, α2) kleiner oder gleich 10° ist.

5. Autonomer Reinigungsroboter (2) nach einem der Ansprüche 1 bis 4, wobei sich das geometrische Zentrum (C) des Hauptkörpers (3) im Wesentlichen auf dem Schnittpunkt der mittleren Längsebene (P1) des Hauptkörpers (3) und einer vertikalen Ebene befindet, die die Drehachsen der Antriebsräder (11) enthält.

6. Autonomer Reinigungsroboter (2) nach einem der Ansprüche 1 bis 5, wobei die Saugeinheit (14) und die Stromversorgungsbatterie (21) im Wesentlichen symmetrisch in Bezug auf die mittlere Längsebene (P1) des Hauptkörpers (3) angeordnet sind.

7. Autonomer Reinigungsroboter (2) nach einem der Ansprüche 1 bis 6, wobei die erste Achse (B1) in einer mittleren vertikalen Ebene (P2) der Stromversorgungsbatterie (21) enthalten ist.

8. Autonomer Reinigungsroboter (2) nach einem der Ansprüche 1 bis 7, wobei die zweite Achse (B2) in einer vertikalen Ebene enthalten ist, die die Motorachse des Saugmotors (15) enthält.

9. Autonomer Reinigungsroboter (2) nach einem der Ansprüche 1 bis 8, wobei sich die Saugeinheit (14) und die Stromversorgungsbatterie (21) hinter den Drehachsen der beiden Antriebsräder (11) befinden.

10. Autonomer Reinigungsroboter (2) nach einem der Ansprüche 1 bis 9, wobei die Nassreinigungsvorrichtung (23) zwei Mopphalter (24) aufweist, die jeweils am Hauptkörper (3) montiert sind, und zwei Mopps (26), die jeweils beweglich an den beiden Mopphaltern (24) montiert und so eingerichtet sind, dass sie mit der zu reinigenden Oberfläche in Kontakt stehen, wobei sich die Stromversorgungsbatterie (21) mindestens teilweise über einem der Mopphalter (24) befindet und wobei sich die Saugeinheit (14) mindestens teilweise über dem anderen der Mopphalter (24) befindet.

11. Autonomer Reinigungsroboter (2) nach einem der Ansprüche 1 bis 10, wobei die Stromversorgungsbatterie (21) Batteriezellen (22) aufweist, die insgesamt zylindrisch geformt sind und Zellachsen aufweisen, die im Wesentlichen parallel zueinander sind.

12. Autonomer Reinigungsroboter (2) nach Anspruch 11, wobei sich die mittlere vertikale Ebene (P2) der Stromversorgungsbatterie (21) im Wesentlichen senkrecht zu den Zellachsen der Batteriezellen (22) erstreckt.

13. Autonomer Reinigungsroboter (2) nach einem der Ansprüche 1 bis 12, der eine rotierende Reinigungsbürste (7) aufweist, die in der Saugkammer (6) untergebracht und drehbar um eine Bürstendrehachse (A1) montiert ist.

## Claims

1. An autonomous cleaning robot (2) comprising:
- a main body (3) having a lower face (4) configured to be oriented toward a surface to be cleaned and a suction mouth (5) opening into the lower face (4) of the main body (3), the main body (3) delimiting a suction chamber (6) fluidly connected to the suction mouth (5),
- a suction unit (14) which is housed at least partially in the main body (3), the suction unit (14) comprising a suction motor (15) having a motor axis and a fan (16) which is coupled to the suction motor (15) and which is configured to generate an air flow through the suction mouth (5),
- a waste collection device (17) comprising a waste collection container (18) located upstream of the suction unit (14) and configured to be traversed by the air flow generated by the suction unit (14) and to retain waste transported by the air flow,
- a wet cleaning device (23) located in a rear part (3.2) of the main body (3),
- a power battery (21) configured to electrically power the autonomous cleaning robot (2), and
- two drive wheels (11) configured to roll on the surface to be cleaned and movably mounted in rotation on the main body (3) respectively about two axes of rotation which are substantially parallel,
**characterized in that** the suction unit (14) and the power battery (21) are arranged on either side of a median longitudinal plane (P1) of the main body (3) and are located in the rear part (3.2) of the main body (3), **in that** a first axis (B1) passing through the center of gravity (G1) of the power battery (21) and a geometric center (C) of the main body (3), which is substantially located in the median longitudinal plane (P1) of the main body (3), is inclined relative to the median longitudinal plane (P1) of the main body (3) by a first angle of inclination (α1), and **in that** a second axis (B2) passing through the center of gravity (G2) of the suction unit (14) and the geometric center (C) of the main body (3) is inclined relative to the median longitudinal plane (P1) of the main body (3) by a second angle of inclination (α2), the first and second axes (B1, B2) defining a separation angle (α3) of less than 130°.

2. The autonomous cleaning robot (2) according to claim 1, wherein the center of gravity (G) of an assembly formed by the suction unit (14) and the power battery (21) is substantially located on the median longitudinal plane (P1) of the main body (3).

3. The autonomous cleaning robot (2) according to claim 1 or 2, wherein each of the first and second angles of inclination (α1, α2) is comprised between 20° and 55°.

4. The autonomous cleaning robot (2) according to any one of claims 1 to 3, wherein an absolute value of the difference between the first and second angles of inclination (α1, α2) is less than or equal to 10°.

5. The autonomous cleaning robot (2) according to any one of claims 1 to 4, wherein the geometric center (C) of the main body (3) is substantially located at an intersection of the median longitudinal plane (P1) of the main body (3) and a vertical plane containing the rotation axes of the drive wheels (11).

6. The autonomous cleaning robot (2) according to any one of claims 1 to 5, wherein the suction unit (14) and the power battery (21) are arranged substantially symmetrically with respect to the median longitudinal plane (P1) of the main body (3).

7. The autonomous cleaning robot (2) according to any one of claims 1 to 6, wherein the first axis (B1) is contained in a median vertical plane (P2) of the power battery (21).

8. The autonomous cleaning robot (2) according to any one of claims 1 to 7, wherein the second axis (B2) is contained in a vertical plane containing the motor axis of the suction motor (15).

9. The autonomous cleaning robot (2) according to any one of claims 1 to 8, wherein the suction unit (14) and the power battery (21) are located behind the rotation axes of the two drive wheels (11).

10. The autonomous cleaning robot (2) according to any one of claims 1 to 9, wherein the wet cleaning device (23) comprises two mop holders (24) each mounted on the main body (3), and two mops (26) removably mounted respectively on the two mop holders (24) and configured to be in contact with the surface to be cleaned, the power battery (21) being located at least partially above one of the mop holders (24) and the suction unit (14) being located at least partially above the other of the mop holders (24).

11. The autonomous cleaning robot (2) according to any one of claims 1 to 10, wherein the power battery (21) comprises battery cells (22) that are generally cylindrical in shape and have cell axes that are substantially parallel to each other.

12. The autonomous cleaning robot (2) according to claim 11, wherein the median vertical plane (P2) of the power battery (21) extends substantially perpendicular to the cell axes of the battery cells (22).

13. The autonomous cleaning robot (2) according to any one of claims 1 to 12, which comprises a rotating cleaning brush (7) housed in the suction chamber (6) and movably mounted in rotation about a brush rotation axis (A1).
